# EUROPEAN PATENT APPLICATION

(11) **EP 4 640 398 A1**
(43) Date of publication of application: **29.10.2025**
(21) Application number: 24172787.4
(22) Date of filing: 26.04.2024
(51) Int. Cl.: B29C 45/00, B29C 45/14, C08L 23/02, C08L 51/06, C08L 91/00, C08L 91/06

(54) **POLYOLEFIN COPOLYMER-BASED HOTMELTS FOR LOW PRESSURE MOLDING MANUFACTURING OF ARTICLES WITH GOOD ALCOHOL RESISTANCE**

(71) Applicant: Henkel AG & Co. KGaA, 40589 Düsseldorf (DE)
(72) Inventor: ROSCHKOWSKI, Thomas, 40229 Düsseldorf (DE); KLUTH, Andre, 40721 Hilden (DE); PIEGRZYK, Laura, 40227 Düsseldorf (DE); BECKER, Bettina, 40822 Mettmann (DE); GEMBA, Sarah, 40229 Düsseldorf (DE)
(74) Representative: Viering, Jentschura & Partner mbB Patent- und Rechtsanwälte

(57) **Abstract**

The present invention relates to a low pressure molding process employing a polyolefin copolymer-based molding material for manufacturing an article requiring alcohol resistance and the use of the polyolefin copolymer based materials for low pressure molding applications.

## Description

### Field of the Invention

The present invention relates to a low pressure molding process employing a polyolefin copolymer based molding material for manufacturing an article requiring alcohol resistance and the use of said polyolefin copolymer based material for low pressure molding applications.

### Background

Hotmelt adhesives are well-suited for low pressure molding (LPM) applications due to their unique processing characteristics:
The low viscosity of hotmelts in the molten state allows them to be easily injected into the mold at much lower pressures compared to traditional injection molding. Typical LPM injection pressures are lower than the injection pressures required for conventional injection molding.
This gentle, low-pressure injection process is crucial for protecting delicate electronic components and assemblies that cannot withstand the high stresses of traditional molding.
The low pressure enables complete encapsulation and sealing of the components without causing damage.

Additionally, the rapid solidification of hotmelts upon cooling, often within 10-50 seconds, allows for very short LPM cycle times. This, combined with the low injection pressures, makes hotmelt LPM a highly efficient and cost-effective solution compared to epoxy potting or other encapsulation methods. Overall, the low-pressure processability of hotmelt adhesives is a key advantage that enables their use in gentle, high-speed LPM applications for protecting sensitive electronics and other delicate components.

LPM utilizes thermoplastic materials, typically polyamides, that have a very low viscosity at the processing temperature. The low viscosity is important because it allows the material to flow around and encapsulate delicate electronic components without applying high pressure that could damage them. The low viscosity enables the material to fill the mold cavity quickly, in just a few seconds, while the continuous injection pressure compensates for shrinkage as the material cools and solidifies. If the viscosity is too high, it can lead to issues like short shots, sinks, and poor mold filling. If the viscosity is too low, it can cause flash and other defects. Monitoring and adjusting the viscosity is crucial for maintaining a stable LPM process
With low pressure molding using the commonly employed polyamides, encapsulation electronic devices is feasible in a gentle way, however, said material are not resistant to moisture and/or alcohol, i.e., current low pressure molding materials have a disadvantage when it comes to moisture and/or alcohol resistance, which is critical in applications like disinfection of reusable electronical devices (e.g. in the medical sector). Thus, for example in the medical field, suitable LPM-hotmelts are sought after for the creation of reusable electronical devices that withstand alcohol cleaning.

It is thus an object underlying the present invention to provide improved hotmelts for low pressure molding applications, in particular hotmelts with application viscosity suitable for low pressure molding processes, excellent deformability from the mold, the surface hardness (upon hardening) required of the articles, as well as alcohol and water resistance. In addition, an object underlying the present invention is the provision of a hotmelt which does not exhibit cytotoxicity in accordance with ISO 10993-5 and is safe for skin contact from a medical point of view. Further objects underlying the present invention is to provide an improved low pressure molding process employing the aforementioned hotmelt as well as an article obtainable by said process.

### Summary of the Invention

The above-outlined problem has been solved by the present invention. Specifically, the invention relates to:
A low pressure molding process comprising the steps of:
(i) placing a component to be encapsulated into a mold;
(ii) melting a hotmelt;
(iii) injection of the molten hotmelt through a nozzle into a mold;
(iv) solidification of the injected molten hotmelt by cooling;
(v) ejection of the molded article from the mold;
wherein the hotmelt comprises at least one polyolefin copolymer.

The viscosity of the hotmelt may range from 500 to 50.000 mPa.s, preferably from 750 to 30.000 mPa.s and most preferably from 1000 to 10.000 mPa.s.

The process may have a cycle time of 1 to 60 s, preferably of 1 to 40 s and most preferably of 1 to 20 s.

The hotmelt may have a processability in molding applications at 100 to 10.000 kPa, preferably at 100 to 5000 kPa, more preferably 100 to 2000 kPa, even more preferably 100 to 1500 kPa and most preferably 100 to 1000 kPa. Injection of the hotmelt may be performed at 100 to 10.000 kPa, preferably at 100 to 5000 kPa, more preferably 100 to 2000 kPa, even more preferably 100 to 1500 kPa and most preferably 100 to 1000 kPa .

The hotmelt, upon solidification, may have a surface hardness with a Shore A value of greater than 80, preferably with a Shore A value greater than 90. The hotmelt, upon solidification, may have a surface hardness with a Shore A value of 100 or less. The hotmelt, upon solidification, may have a surface hardness with a Shore A value ranging between 80 and 100, preferably between 90 and 100.

The at least one polyolefin copolymer may be a copolymer of
(i) at least two α-olefins of 2 to 10 carbon atoms,
(ii) at least one α-olefin of 2 to 10 carbon atoms and at least one vinyl compound other than the α-olefin of 2 to 10 carbon atoms.

Alpha olefins are a family of unsaturated hydrocarbons with the chemical formula CₙH₂ₙ. They have a double bond at the alpha (α) position, between the first and second carbon atoms.

The α-olefin of 2 to 10 carbon atoms may be selected from the group consisting of ethylene, propylene, butene-1, pentene-1, hexene-1, 3-methylbutene-1, 4-methylpentene-1, 3-methylhexene-1, octene-1, preferably the α-olefin of 2 to 10 carbon atoms is selected from the group consisting of ethylene, propylene, butene-1, octene-1. The vinyl compound may be an aromatic vinyl compound selected from the group consisting of styrene, α-methylstyrene, methylstyrene, monochlorostyrene, dichlorostyrene, monobromostyrene, dibromostyrene, fluorostyrene, p-t-butylstyrene, and ethylstyrene, preferably styrene; an alkyl acrylate selected from the group consisting of methyl acrylate, ethyl acrylate, propyl acrylate, butyl acrylate, amyl acrylate, hexyl acrylate, octyl acrylate, 2-ethylhexyl acrylate, cyclohexyl acrylate, and phenyl acrylate; a vinyl ester compound selected from the group consisting of methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate, benzyl methacrylate; an unsaturated acid anhydride selected from maleic anhydride and itaconic acid, preferably maleic anhydride; and/or an unsaturated acid selected from the group consisting of acrylic acid and methacrylic acid.

The at least one polyolefin copolymer may be selected from the group consisting of:
(i) ethylene-octene random or block copolymer,
(ii) ethylene-propylene random or block copolymer,
(iii) ethylene-butene random or block copolymer,
(iv) ethylene-maleic anhydride graphted copolymer,
(v) propylene-maleic anhydride graphted copolymer,
(vi) styrene-ethylene-propylene-styrene block copolymers (SEPS),
(vii) styrene-ethylene-butylene-styrene block copolymer (SEBS),
(viii) styrene-iroprene-styrene block copolymer (SIS),
(xi) styrene-butadiene-styrene block copolymer (SBS),
(x) ethylene-propylene-butylene terpolymer, and/or
(xi) ethylene-propylene-octene terpolymer.

The hotmelt may comprise from 20 to 90 wt.%, preferably from 25 to 85 wt.%, and most preferably from 30 to 80 wt.% of the at least one polyolefin copolymer based on the total weight of the hotmelt.

The hotmelt may have a softening point of above 90°C, more preferably above 100 °C, and most preferably 110 °C or more.

The hotmelt may comprise a hydrocarbon resin. The hydrocarbon resin may be an amorphous, thermoplastic polymer with a molecular weight of 400 to 5,000 g/mol, preferably 500 to 3000 g/mol and/or aromatic or cycloaliphatic hydrocarbon resin selected from the group consisting of a C5 aliphatic resin, a C9 aromatic resin, a C5/C9 copolymer resin and modified or hydrogenated versions thereof.

The hotmelt may comprise at least one additive selected from the group consisting of antioxidants, waxes, UV protectors, solvents, adhesion promoters, fillers, pigments, flame retardants, UV absorbers, optical brighteners and fragrances, preferably in an amount of 0.01 to 20 wt.% by weight, more preferably from 0.1 to 5 % by weight, based on the total weight of the hotmelt.

The hotmelt may comprise at least one further polymer selected from the group consisting of polymers based on acrylate, polyester, urethane, ethylene acrylate, butyl rubber and (synthetic) natural rubber; ethylene-vinyl acetate copolymers (EVA), polyamide (co)polymers (PA), individually and in a mixture, particularly preferred is a styrene block copolymer such as a styrene and styrene-butadiene copolymer (SBC or SBS, SBR), or a styrene-isoprene-butylene copolymer (SIBS).

In a further aspect, the invention relates to a use of a hotmelt comprising at least one polyolefin copolymer in a low pressure molding process for medical articles and in the field of assembly.

In a further aspect, the invention relates to an article obtainable by the low pressure molding process according to the invention.

The article may have a surface hardness with a Shore A value of greater than 80, preferably with a Shore A value greater than 90. The article may have a surface hardness with a Shore A value of 100 or less. The article may have a surface hardness with a Shore A value ranging between 80 and 100, preferably between 90 and 100.

The article may be resistant to alcohol.

### Detailed Description of the Invention

It will be understood that, although specific embodiments of the invention will be described hereinbelow for purposes of illustration, various modifications may be made without deviating from the spirit and scope of the invention. Therefore, the present invention is not limited except as by the appended claims. All embodiments disclosed and claimed herein can be implemented and executed in view of the disclosure without undue experimentation. The content of each of the documents referred to herein is to be understood to be incorporated herein by reference in its entirety.

The present invention serves to realize one or more of the above-outlined objects. The molded articles molded with the molding material of the present invention in the low pressure molding process according to the present invention are less susceptible to defects such as whitening, cracking and deformation even when in contact with alcohol. Moreover, such an article is excellent in mechanical strength and surface hardness. Therefore, the articles obtained by the inventive process using the hotmelt according to the present invention for low pressure molding, when used under conditions of contact with alcohol, such reusable electronical devices in the medical field that need to withstand alcohol cleaning.

The present invention relates to a low pressure molding process for manufacturing an article comprising the steps of:
(i) placing a component to be encapsulated into a mold;
(ii) melting a hotmelt;
(iii) injection of the molten hotmelt through a nozzle into a mold;
(iv) solidification of the injected molten hotmelt by cooling;
(v) ejection of the molded article from the mold;
wherein the hotmelt comprises at least one polyolefin copolymer.

The process is well-suited for encapsulating and sealing circuitry against environmental factors like dirt, dust, moisture (IP68 water resistance ratings) whilst at the same time achieving the surface hardness required of such articles as well as alcohol resistance which renders the articles obtained by the process particularly suitable for applications in medicine where repeated disinfection of the articles using alcohols is routine.

The low pressure molding process may be used to encapsulate and protect delicate electronic components, such as printed circuit boards (PCBs) and wire assemblies, i.e., the component to be encapsulated may be a printed circuit board (PCB), a printed circuit board assemblies (PCBA), wire assembly, cable assembly, an electronic component (such as micro-switch, sensor, connector, or wire harness), a battery, a solar inverter, or a LED lens. Preferably, the component is a printed circuit board (PCB).

Melting of the hotmelt may be performed in a melting tank or in a hot melt extruder.

The temperature may affect the quality of encapsulation in low pressure molding. Preferably, the injection temperature of the molten hotmelt ranges between 130 and 220 °C, more preferably, between 140 and 200 °C and most preferably between 150 and 190 °C. As such, the injection temperature may be 130 °C, 131 °C, 132 °C, 133 °C, 134 °C, 135 °C, 136 °C, 137 °C, 138 °C, 139 °C, 140 °C, 141 °C, 142 °C, 143 °C, 144 °C, 145 °C, 146 °C, 147 °C, 148 °C, 149 °C, 150 °C, 151 °C, 152 °C, 153 °C, 154 °C, 155 °C, 156 °C, 157 °C, 158 °C, 159 °C, 160 °C, 161 °C, 162 °C, 163 °C, 164 °C, 165 °C, 166 °C, 167 °C, 168 °C, 169 °C, 170 °C, 171 °C, 172 °C, 173 °C, 174 °C, 175 °C, 176 °C, 177 °C, 178 °C, 179 °C, 180 °C, 181 °C, 182 °C, 183 °C, 184 °C, 185 °C, 186 °C, 187 °C, 188 °C, 189 °C, 190 °C, 191 °C, 192 °C, 193 °C, 194 °C, 195 °C, 196 °C, 197 °C, 198 °C, 199 °C, 200 °C, 201 °C, 202 °C, 203 °C, 204 °C, 205 °C, 206 °C, 207 °C, 208 °C, 209 °C, 210 °C, 211 °C, 212 °C, 213 °C, 214 °C, 215 °C, 216 °C, 217 °C, 218 °C, 219 °C or 220 °C.

The injection time is not further defined since said parameters is dependent on the hotmelt, the mold, the chosen temperature and injection pressure. As such, the injection time should be chosen to be long enough such that the mold is filled fully.

The hotmelt may be injected into a mold at very low pressures. Injection may take place at 100 to 10.000 kPa, preferably at 100 to 5000 kPa, more preferably 100 to 2000 kPa, even more preferably 100 to 1500 kPa and most preferably 100 to 1000 kPa, to gently encapsulate the component.

After injection, the encapsulated components need to be allowed to cool. Cooling may be performed at room temperature.

Cooling time has an effect on whether the encapsulation material fully hardens and bonds to the components. The key point is that the cooling time needs to be long enough to allow the molded part to solidify and reach the required rigidity before demolding, but not excessively long as it impacts the overall cycle time and productivity. Cooling may be performed for less than 15 seconds per 2.5 mm of wall thickness of the injected hotmelt in the mold, preferably less than 10 seconds per 2.5 mm of wall thickness of the injected hotmelt in the mold and more preferably less than 7 seconds per 2.5 mm of wall thickness of the injected hotmelt in the mold. In total, cooling time may range between 1 and 50 seconds, preferably 1 and 40 seconds, more preferably 1 and 30 seconds, even more preferably 1 and 20 seconds and most preferably between 1 and 10 seconds.

Ejection of the molded article may be performed by hand or automatically via ejection valves.

The process may have a cycle time of 1 to 60 s, preferably of 1 to 40 s and most preferably of 1 to 20 s.

### Hotmelt

The viscosity of the hotmelt may range from 500 to 50.000 mPa.s, preferably from 750 to 30.000 mPa.s and most preferably from 1000 to 10.000 mPa.s.

The hotmelt may have a processability in molding applications at 100 to 10.000 kPa, preferably at 100 to 5000 kPa, more preferably 100 to 2000 kPa, even more preferably 100 to 1500 kPa and most preferably 100 to 1000 kPa .

The hotmelt, upon solidification may have a surface hardness with a Shore A value of greater than 80, preferably with a Shore A value greater than 90. The hotmelt, upon solidification, may have a surface hardness with a Shore A value of 100 or less. The hotmelt, upon solidification, may have a surface hardness with a Shore A value ranging between 80 and 100, preferably between 90 and 100.

According to the present invention, the hotmelt comprises at least one polyolefin copolymer.

The hotmelt may comprise from 20 to 90 wt.%, preferably from 25 to 85 wt.%, and most preferably from 30 to 80 wt.% of the at least one polyolefin copolymer based on the total weight of the hotmelt. The hotmelt may comprise 20 wt.%, 21 wt.%, 22 wt.%, 23 wt.%, 24 wt.%, 25 wt.%, 26 wt.%, 27 wt.%, 28 wt.%, 29 wt.%, 30 wt.%, 31 wt.%, 32 wt.%, 33 wt.%, 34 wt.%, 35 wt.%, 36 wt.%, 37 wt.%, 38 wt.%, 39 wt.%, 40 wt.%, 41 wt.%, 42 wt.%, 43 wt.%, 44 wt.%, 45 wt.%, 46 wt.%, 47 wt.%, 48 wt.%, 49 wt.%, 50 wt.%, 51 wt.%, 52 wt.%, 53 wt.%, 54 wt.%, 55 wt.%, 56 wt.%, 57 wt.%, 58 wt.%, 59 wt.%, 60 wt.%, 61 wt.%, 62 wt.%, 63 wt.%, 64 wt.%, 65 wt.%, 66 wt.%, 67 wt.%, 68 wt.%, 69 wt.%, 70 wt.%, 71 wt.%, 72 wt.%, 73 wt.%, 74 wt.%, 75 wt.%, 76 wt.%, 77 wt.%, 78 wt.%, 79 wt.%, 80 wt.%, 81 wt.%, 82 wt.%, 83 wt.%, 84 wt.%, 85 wt.%, 86 wt.%, 87 wt.%, 88 wt.%, 89 wt.% or 90 wt.% of the at least one polyolefin copolymer based on the total weight of the hotmelt.

In a preferred embodiment, the softening point of the hotmelt according to the invention is above 90°C, more preferably above 100 °C, and most preferably 110 °C or more (ring-ball method, ASTM E28, glycerol).

Preferably, the hotmelt according to the invention has a glass transition temperature Tg of -70 to 80°C, more preferably of -60 to 30°C, even more preferably of -50 to 20°C, and most preferably -45 to 10 °C, such as -40 to 0 °C, -35 to -5 °C or -30 to -10 °C (measurement: DSC).

### Polyolefin copolymers

Polyolefins are a class of thermoplastic polymers derived from the polymerization of simple olefin (alkene) monomers. They have the general chemical formula (CH₂CHR)ₙ, where R is a functional (e.g. alkyl) group.

The at least one polyolefin copolymer may have a glass transition temperature Tg of -80 to 50°C, more preferably of -70 to 30°C, even more preferably of -60 to 10°C, and most preferably -60 to -20 °C.

The at least one polyolefin copolymer may have a Brookfield viscosity of at least 1 Pa s at 150 °C, preferably at least 5 Pa s at 150 °C, more preferably at least 10 Pa s at 150 °C and most preferably at least 15 Pa s at 150 °C. The at least one polyolefin copolymer may have a Brookfield viscosity of less than 800 Pa s at 150 °C, preferably less than 600 Pa s at 150 °C, more preferably less than 500 Pa s at 150 °C, even more preferably less than 100 Pa s at 150 °C and most preferably less than 30 Pa s at 150 °C.

The ideal MFI of a copolymer used in the hotmelt molding material depends on factors like the part geometry, required mechanical properties, and the specific molding process being used. The at least one polyolefin copolymer may have an MFI ranging between 0.5 and 500 g/10 min. Preferably, the at least one polyolefin copolymer has a MFI of more than 1g/10min (230 °C/2,16kg). Most preferably, the at least one polyolefin copolymer has a MFI of more than 5g/10min (230 °C/2,16kg).

The at least one polyolefin copolymer may a copolymer (random copolymer, grafted copolymer, alternating copolymer, block copolymer, terpolymer) of
(i) at least two α-olefins of 2 to 10 carbon atoms, preferably 2 to 8 carbon atoms,
(ii) at least one α-olefin of 2 to 10 carbon atoms, preferably 2 to 8 carbon atoms, and at least one vinyl compound other than the α-olefin of 2 to 10 carbon atoms.
the α-olefin of 2 to 10 carbon atoms may be selected from the group consisting of ethylene, propylene, butene-1, pentene-1, hexene-1, 3-methylbutene-1, 4-methylpentene-1, 3-methylhexene-1, octene-1 . Preferably the α-olefin of 2 to 10 carbon atoms is selected from the group consisting of ethylene, propylene, butene-1, octene-1. More preferably, the α-olefin of 2 to 10 carbon atoms is ethylene, propylene or octene-1.

The vinyl compound may be an aromatic vinyl compound selected from the group consisting of styrene, α-methylstyrene, methylstyrene, monochlorostyrene, dichlorostyrene, monobromostyrene, dibromostyrene, fluorostyrene, p-t-butylstyrene, and ethylstyrene, preferably styrene.

The vinyl compound may be an alkyl acrylate selected from the group consisting of methyl acrylate, ethyl acrylate, propyl acrylate, butyl acrylate, amyl acrylate, hexyl acrylate, octyl acrylate, 2-ethylhexyl acrylate, cyclohexyl acrylate, and phenyl acrylate.

The vinyl compound may be a vinyl ester compound selected from the group consisting of methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate, benzyl methacrylate.

The vinyl compound may be an unsaturated acid anhydride selected from maleic anhydride and itaconic acid. Preferably, the vinyl compound is maleic anhydride.

The vinyl compound may be an unsaturated acid selected from the group consisting of acrylic acid and methacrylic acid.

The at least one vinyl compound may be two or more of the above-outlined vinyl compounds, for example, aromatic vinyl compound and unsaturated acid anhydride.

The at least one polyolefin copolymer may be one or more selected from the group consisting of ethylene-octene random or block copolymer, ethylene-propylene random or block copolymer, ethylene-butene random or block copolymer, ethylene-octene random or block copolymer, maleic anhydride grafted polyethylene copolymer, maleic anhydride grafted polypropylene copolymer, styrene-ethylene-propylene-styrene block copolymers (SEPS), styrene-ethylene-butylene-styrene block copolymer (SEBS), styrene-isoprene-styrene block copolymer (SIS), styrene-butadiene-styrene block copolymer (SBS), ethylene-propylene-butylene terpolymer, and/or ethylene-propylene-octene terpolymer. Preferably, the at least one polyolefin copolymer is ethylene-propylene random or block copolymer, ethylene-octene random or block copolymer, propylene-maleic anhydride grafted copolymer and/or ethylene-maleic anhydride grafted copolymer.

### Additional resins

Resins are typically used to change the viscosity of the molten hotmelt composition and the tackiness the solidified hotmelt, preferably to lower it, and to influence the odor, the (initial) color and the color stability of the composition.

The hotmelt may comprise a hydrocarbon resin.

Hydrocarbon resins are a class of synthetic polymers derived from the polymerization of unsaturated hydrocarbon compounds, primarily from the byproducts of petroleum and coal tar processing. The hotmelt may comprise the following hydrocarbon resins:
(i) C5 Aliphatic Resins: Derived from the polymerization of C5 aliphatic monomers like isoprene and 1,3-pentadiene.
(ii) C9 Aromatic Resins: Produced from the polymerization of C9 aromatic monomers such as styrene, α-methylstyrene, and indene.
(iii) C5/C9 Copolymer Resins: Resins made from a combination of both C5 aliphatic and C9 aromatic monomers.
(iv) Hydrogenated Resins: Hydrocarbon resins as outlined above that have been hydrogenated.

Key advantages of hydrocarbon resins include their ability to improve adhesion, moisture resistance, UV stability, and thermal stability in the final products. They are also cost-effective compared to other resin types.

The hotmelt may comprise the above-outlined hydrocarbon resins.

The hotmelt may comprise (cyclo)aliphatic hydrocarbons, for example having 1 to 30 carbon atoms (aliphatic) or 6 to 30 carbon atoms (cycloaliphatic), e.g. 10 to 25 carbon atoms. In various embodiments, the (cyclo)aliphatic hydrocarbons may comprise a combination of linear, branched, cyclic aliphatic (cycloaliphatic), partially unsaturated or aromatic or heteroaromatic chemical radicals and may optionally comprise one or more functional groups, such as, but not limited to, a hydroxyl, alkyl, aryl, alkoxy, haloalkyl or a keto group.

The hotmelt according to the invention may further comprise at least one further resin. In particular, these are resins that have a softening point of 35 to 160°C or up to 130°C (ring-ball method, DIN 52011). Suitable resins include, but are not limited to hydroabietyl alcohol and its esters, in particular esters with aromatic carboxylic acids such as terephthalic acid and phthalic acid; modified natural resins such as resin acids from balsam resin, tall resin or root resin, e.g. fully saponified balsam resin; alkyl esters of optionally partially hydrogenated rosin with low softening points such as, for example methyl, diethylene glycol, glycerol and pentaerythritol esters; terpene resins, in particular terpolymers or copolymers of terpene, such as styrene terpenes, α-methyl-styrene terpenes, phenol-modified terpene resins and hydrogenated derivatives thereof; acrylic acid copolymers, preferably styrene-acrylic acid copolymers and resins based on functional hydrocarbon resins, for example with 3 to 8 carbon atoms, in particular 5 carbon atoms. Particularly preferably, the at least one further resin is a solid resin.

Preferably, the at least one further resin is a natural resin, more preferably a tall oil ester, gum rosin (rosin ester), an optionally partially polymerized tall resin, a terpene.

The hotmelt may comprise a rosin ester.

Rosin, also known as colophony or Greek pitch (Pix graeca), is a solid hydrocarbon secretion from plants, typically from conifers such as pines (e.g. Pinus palustris and Pinus caribaea). Rosin may contain a mixture of rosin acids, although the exact composition of the rosin depends in part on the plant species. Rosin acids are C20 monocarboxylic acids with condensed rings, the core of which consists of three condensed six-carbon rings containing double bonds that vary in number and position.

Suitable rosin acids include, but are not limited to, abietic acid, neoabietic acid, dehydroabietic acid, dihydroabietic acid, pimaric acid, levopimaric acid, sandaracopimaric acid, isopimaric acid and palustric acid and isomers thereof. In various embodiments, natural rosin comprises, in particular, a mixture of the rosin acids abietic acid and/or pimaric acid.

Rosin is commercially available and can be obtained from pine trees by distillation of oleoresin (gum rosin is the residue of distillation), by extraction of pine stumps (wood rosin) or by fractionation of tall oil (tall oil rosin). Any type of rosin may be used to prepare the hotmelts described herein, including tall oil rosin, gum rosin and wood rosin, as well as mixtures thereof. If desired, the rosin may be subjected to one or more purification steps (e.g., distillation under reduced pressure, extraction, and/or crystallization). Hydrogenated rosins and partially hydrogenated rosins can also be used as a rosin source. An example of a commercially available hydrogenated rosin suitable for use in the present disclosure is FORAL^{™} AX-E, sold by Eastman Chemical Company. Examples of commercially available hydrogenated rosin include STAYBELITE^{™} Resin-E, marketed by Eastman Chemical Company, and HYDROGAL^{™}, marketed by DRT (Dérivés Résiniques et Terpéniques). Suitable examples of commercially available rosin esters include Sylvalite 9000 and Sylvalite 2100.

As described above, rosin contains a mixture of rosin acids (e.g. abietadienoic acids), which may contain conjugated double bonds in their ring systems. These conjugated double bonds can be a source of oxidative instability. Accordingly, the rosin ester, may have been processed to reduce the percentage of components containing conjugated double bonds.

The rosin of the rosin ester may contain equal to or more than 30% by weight of dehydroabietic acid, for example from 30 to 60% by weight or from 40 to 55% by weight, based on the total weight of the rosin. The weight ratio of dehydroabietic acid to dihydroabietic acid in the rosin may be between 1:0.80 and 1:0.25, for example between 1:0.70 and 1:0.35 or alternatively between 1:0.55 and 1:0.40.

The rosin ester may have a weight average molecular weight Mw of from 500 g/mol to 9000 g/mol, for example from 700 g/mol to 8000 g/mol, from 1000 to 5000 g/mol, or from 1100 g/mol to 3000 g/mol, as measured by gel permeation chromatography (GPC) according to ASTM D5296-05.

### Further additives

The hotmelt may at least one further additive selected from the group consisting of antioxidants, waxes, UV protectors, solvents, adhesion promoters, fillers, pigments, flame retardants, UV absorbers, optical brighteners and fragrances.

Preferably the hotmelt comprises said additive in an amount of 0.01 to 20 wt.% by weight, more preferably from 0.1 to 5 % by weight, based on the total weight of the hotmelt.

The hotmelt may comprise at least one further polymer selected from the group consisting of polymers based on acrylate, polyester, urethane, ethylene acrylate, butyl rubber and (synthetic) natural rubber. Said further polymer may be ethylene-vinyl acetate copolymers (EVA), polyamide (co)polymers (PA), individually and in a mixture. Particularly preferred is a styrene block copolymer such as a styrene and styrene-butadiene copolymer (SBC or SBS, SBR), or a styrene-isoprene-butylene copolymer (SIBS).

Another object of the present invention is a process for preparing the hotmelt according to the invention, comprising mixing the hydrocarbon resin with further components of the hotmelt, such as the at least one polyolefin polymer and/or at least one maleic anhydride grafted polyolefin polymer in a suitable sequence, preferably at a temperature of 100 to 200°C, more preferably at 120 to 180°C, even more preferably at 150 to 170°C. Thus, the hotmelt may be formulated by bringing together the constituent ingredients in pre-determined amounts. This may be performed using any of the mixing techniques known in the art: it would certainly be preferred however that the ingredients are not mixed by hand but are instead mixed by machine - a static or dynamic mixer, for example - in pre-determined amounts under anhydrous conditions.

A preferred mixing sequence for the process for preparing the hotmelt according to the invention is:
1. polyolefin copolymers and stabilizer additives
2. tackifiers
3. waxes and other additives
at temperatures usually ~30°C above targeted softening point of the adhesive, preferably at a temperature of 100 to 200°C, more preferably at 120 to 180°C, even more preferably at 150 to 170°C.

Preferably, the process for preparing the hotmelt according to the invention comprises the steps of:
1) loading the polyolefin copolymers and the stabilizer additives into the reactor,
2) melting the loaded polymers and the stabilizer,
3) adding the tackifiers,
4) (optionally) adding the waxes and other additives,
5) homogenizing the mixture.

Preferably, the mixing is done in a heated reactor is heated at mixing temperature of about 30°C above the targeted softening point of the adhesive, preferably at a temperature of 100 to 200°C, more preferably at 120 to 180°C, even more preferably at 150 to 170°C.

Preferably, the melting step of the polymers and the stabilizer is performed until said compounds are fully molten.

Preferably, homogenization is performed until the components of the hotmelt composition are fully homogenized.

Preferably, waxes and other additives (other than polyolefin copolymers, stabilizer additives and tackifiers) are added last. This postponed admixing of waxes and further additives avoids or at least diminishes degradation thereof.

Another object of the present invention is the use of the hotmelt according to the invention as a molding material in a low pressure molding process, as an adhesive, as a sealant, or as the main part of design or article.

Another object of the present invention is an article obtained by the low pressure molding process as outlined above. Preferably, the article is an electronical device. Most preferably, the article is an electronical device in the medical field.

### Additives and Adjunct Ingredients

The hot melt compositions according to the present invention will typically further comprise adjuvants and additives that can impart improved properties to these compositions. For instance, the adjuvants and additives may be determinative of: elastic properties including elastic recovery, processing time, curing time, and residual tack.

Included among such adjuvants and additives are: plasticizers; stabilizers including UV stabilizers; fillers; drying agents; adhesion promoters; air release agents; defoamers; flame retardants; rheological adjuvants; and, color pigments such as titanium dioxide, iron oxides or carbon black. For completeness, it is noted that the compositions should be substantially free of solvents and non-reactive diluents.

Such adjuvants and additives can be used in such combination and proportions as desired, provided they do not adversely affect the nature and essential properties of the composition. While exceptions may exist in some cases, these adjuvants and additives should not in toto comprise more than 50 wt.% of the total composition and preferably should not comprise more than 20 wt.% of the composition.

A "plasticizer" for the purposes of this invention is a substance that decreases the viscosity of the composition. Herein the plasticizer may constitute up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Dusseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

"Stabilizers" for purposes of this invention are to be understood as antioxidants, UV stabilizers or hydrolysis stabilizers. Herein stabilizers may constitute in toto up to 10 wt.% or up to 5 wt.%, based on the total weight of the composition. Standard commercial examples of stabilizers suitable for use herein include: sterically hindered phenols, of which Irganox 1726 is a commercial example available from BASF; thioethers; benzotriazoles; benzophenones; benzoates; cyanoacrylates; acrylates; amines of the hindered amine light stabilizer (HALS) type; phosphorus; sulfur; and, mixtures thereof.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler. As a further filler, mention may also be made of hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less. Fillers which impart thixotropy to the composition may be preferred for many applications: such fillers are also described as rheological adjuvants, e.g. hydrogenated castor oil, fatty acid amides, or swellable plastics such as PVC. The total amount of fillers present in the compositions of the present invention will preferably be from 0 to 30 wt.%, and more preferably from 0 to 20 wt.%, based on the total weight of the composition. The desired viscosity of the curable composition at its application temperature will typically be determinative of the total amount of filler added.

### Definitions

Within the context of the present invention, the term "copolymer" concerns a type of polymer that is formed by the polymerization of two or more chemically distinct monomers that are covalently bonded together in the polymer chain, i.e., copolymers are distinct from homopolymers, which are formed from a single type of monomer. The arrangement of the monomers in the copolymer chain can vary, resulting in different types of copolymers such as random, alternating, block, and graft copolymers, i.e., a copolymer may be a random (also called statistical) copolymer, an alternating copolymer, a block copolymer, a terpolymer or a graft copolymer.

Within the context of the present invention, the term "liquid" includes liquids and gels as well as pasty compositions. Unless otherwise indicated, the term refers to the state at standard conditions. Preferably, the liquid compositions are flowable and pourable at standard conditions, although it is also possible that the it is a non-Newtonian fluid which has a yield point, i.e. that the fluid is a dilatant (increasing viscosity under shear strain) or pseudo-plasmatic (decreasing viscosity under shear strain) fluid.

Within the context of the present invention, the term "solid" refers to compounds/compositions that are solid at standard conditions, i.e., said compounds/compositions are neither in liquid nor in gaseous form. Preferably, the solids are in the form of a powder, granules or compacts.

Within the context of the present application, "standard conditions" are equivalent to "normal temperature and pressure" which are defined as a temperature of 21±1 °C and an absolute pressure of 101.325 kPa (1 atm).

Unless specified otherwise herein, atmospheric pressure is to be understood to be 101.325 kPa.

Unless specified otherwise herein, room or ambient temperature is to be understood to be 21±1 °C.

Unless otherwise stated, all measurements and processes disclosed herein are to be understood to have been conducted under standard conditions.

Unless otherwise stated, all boiling point values referred to herein are to be understood to be boiling point values as measured at atmospheric pressure.

All percentages given herein in relation to the compositions or formulations relate to weight percentage values (wt.%) relative to the total weight of the respective composition, if not explicitly stated otherwise. Preferably, these percentages refer to weight percentages (wt.%) based on the total weight of the respective dried composition.

Unless stated otherwise, numeric values specified without decimal places refer to the full value specified with one decimal place. Such to exemplify the foregoing, 99 % means 99.0 %.

The terms "phosphate-free" and "phosphonate-free", as used herein, mean that the subject composition is essentially free of phosphates and phosphonates, respectively.

Within the context of the present application, the expression "essentially free" refers to the circumstance in which the species in respect of which the composition or material at hand is essentially free may nonetheless be present in minor quantities (for example, as impurities in other components present in the composition at hand - commercially available solvents may contain minor quantities of, for example, acetone or methylethylketone as unwanted impurities) which do not affect the desired properties taught herein to be associated with the compositions of the present technology. Essentially free in this context may thus mean that the species of which the composition or material in question is essentially free may be present in an amount of 1000 ppm or less, 750 ppm or less, 500 ppm or less, 300 ppm or less, 200 ppm or less, 100 ppm or less, 50 ppm or less, or 10 ppm or less.

The mention of any document herein is not an admission that such document or any of its contents belong to the general knowledge of the skilled person in any jurisdiction.

As used herein, the transitional term "comprising" which is synonymous with "including" or "containing" is inclusive or open-ended and does not exclude additional, unrecited elements or method steps. However, in each recitation of "comprising" herein, it is intended that the term also encompass and may thus be replaced, as alternative embodiments, by the term "consisting essentially of" or "consisting of", where "consisting of" excludes any element or step not explicitly specified and "consisting essentially of" permits the inclusion of additional unrecited elements or steps that do not materially affect the essential or basic characteristics of the composition or method under consideration.

Where a numerical range is disclosed herein, such range is continuous, inclusive of both the minimum and maximum values of the range as well as every value between such minimum and maximum values. Still further, where a range refers to integers, every integer between the minimum and maximum values of such range is included. In addition, where multiple ranges are provided to describe a feature or characteristic, such ranges can be combined. That is to say that, unless otherwise indicated, all ranges disclosed herein are to be understood to encompass any and all sub-ranges subsumed therein. For example, a stated range of from "1 to 10" should be considered to include any and all sub-ranges between the minimum value of 1 and the maximum value of 10 inclusive of the values 1 and 10. Exemplary sub-ranges of the range 1 to 10 include, but are not limited to, 1 to 6.1, 3.5 to 7.8, and 5.5 to 10. It is to be understood that the upper and lower amount, range, and ratio limits set forth herein may be independently combined.

Each element or feature of the invention taught to be present in a given range or amount can be combined within a respective embodiment with the other elements of said embodiment, said other elements likewise being present in the ranges or amounts taught herein for said other elements. All ranges and amounts for one element of an embodiment can be combined with all ranges and amounts of the other elements in said embodiment. As such, ranges or values which are taught for one element or component of the invention, for example, to be preferred, more preferred or most preferred can be combined with any range or amount taught in respect of another element or component of said embodiment, irrespective of whether the range or amount taught in respect of the other element is referred to as being preferred, more preferred or most preferred etc (or simply disclosed without any such label or reference).

As used herein, the singular forms "a", "an" and "the" include plural referents, unless the context clearly dictates otherwise.

"At least one" refers to one or more, i.e. 1, 2, 3, 4, 5, 6, 7, 8, 9, 10 or more of the referenced species. In connection with a given species, the term does not relate to the total amount of molecules, but to the type of compound. Such to exemplify the foregoing, "at least one alcohol" means that one or more alcohols may be included, without specifying the amount of each alcohol. The above applies *mutatis mutandis* to expressions referring to a higher number (e.g., "at least two," "at least three," etc.), each beginning with a respective higher number (e.g., 2, 3, 4, 5, 6, 7, 8, 9, 10 or more for "at least two"; 3, 4, 5, 6, 7, 8, 9, 10 or more for "at least three"; etc.).

The terms "about" or "approximately", as used herein in connection with a numerical value, refer to a variance of ±10 %, preferably ±5 %, more preferably ±1 %, with respect to the given numerical value.

Unless stated otherwise, references to molar masses refer to the weight-average molar mass (Mw).

Alcohol resistance, as used herein, relates to the limited occurrence or absence of defects in the material following the treatment of said material with alcohol, preferably the treatment of said material with alcohol under elevated temperatures (more than 30 °C). Said defects are defined as whitening, cracking or deformation which affect mechanical strength and surface hardness of the material. The method for quantifying the alcohol resistance is outlined hereinbelow.

### Examples

The examples set forth hereinbelow serve merely to exemplify specific embodiments of the invention and in no way limit the scope of the invention as claimed and described elsewhere herein.

Unless stated otherwise, all synthetic processes and parameter measurements are to be understood to have been conducted at room/ambient temperature, i.e. at 21±1 °C, and atmospheric pressure.

Unless otherwise stated, all reagents are laboratory grade.

All reagents used in the Mixtures and Examples described hereinbelow were purchased commercially under the stipulated product names.

### Methods for measuring

### Molas mass

The number average- and weight average molar mass can be determined, for example, by gel permeation chromatography (GPC) according to DIN 55672-1:2007-08 with THF as eluent.

### Viscosity

Viscosity measurements were performed on a Brookfield RVDV-II+ Pro Viscometer (with spindle 27 at rotational speeds corresponding to a torque range of 20 to 80%, preferably 50%) at a temperature corresponding to the low pressure molding application of the material, preferably at a temperature ranging from 120 to 210 °C.

### Releasing Behavior

The hotmelt material, when used in low pressure molding requires a certain time for processing based on its releasing behavior, i.e., its deformability form mold, which is measured in cycle times (seconds).

### Surface Hardness

The Shore A Hardness Scale measures the hardness of flexible mold rubbers that range in hardness from very soft and flexible, to medium and somewhat flexible, to hard with almost no flexibility at all. Semi-rigid plastics can also be measured on the high end of the Shore A Scale. The Shore A hardness scale is determined by measuring the hardness of different materials and comparing their hardness values using the same hardness scale. The hardness of materials measured using the Shore A scale is relative to the hardness of other materials using the same scale. Hardness values are obtained by the amount of indentation observed when a particular indentation force is applied. Softer materials will have deeper indentations while harder materials will have shallower indentations.

The method for testing the surface hardness is based on DIN ISO 7619-1: twenty four hours after producing a test sample using a Teflon mold with the thickness of the test sample being at least 6 mm, the Shore A hardness measuring device (Shore A Hardness Tester, Zwick) is used to determine values at 5 specified measuring points (top, bottom, right, left, center, all of which are required to be free of air inclusions/bubbles in the material). The Shore A hardness measuring device is placed flat at each measuring point for 15 seconds and the value is then read off.

### Alcohol Resistance

Molten Hotmelt is poured onto Teflonpaper with a plain surface and left to cool down to room temperature. After cool down for 24h, it is made sure that the plain surface does not show any surface defects such as deformation. A representative area of the hardened hotmelt is chosen for testing. Cotton tissue is drenched in isopropanol (lab grade) which is used for wiping the surface of the hardened hotmelt with slight pressure by hand 15 times back and forth. After 15 wipes, the wiping is stopped for 1min. The procedure is repeated for a total of 30 times, each time redrenching the cotton tissue. The evaluation of alcohol resistance is performed thereafter by 3 trained employees that visually inspect the wiped surface for isopropanol-caused grooves and scratches. If the surface does not show a significant change, the test is considered PASS.

### Ring-Ball Method

The ring-and-ball method is a widely used technique to determine the softening point of various materials, including bitumen, waxes, resins, and hydrocarbon solids. It was performed in accordance with ASTM E28 using glycerol.

### Glass Transition Temperature

Differential scanning calorimetry (DSC) is a widely used technique to determine the glass transition temperature (Tg) of polymers and other amorphous materials. It was performed in accordance with DIN 51007.

### Melt Flow Index

The Melt Flow Index (MFI) is inversely related to the viscosity of a plastic material. MFI measures the flow rate of a molten plastic under specific temperature and load conditions, expressed in grams per 10 minutes. The higher the MFI value, the lower the viscosity of the plastic. Conversely, a lower MFI indicates a higher viscosity. Said parameter was measured in accordance with ISO 1133.

### Experimental data:

The following Examples were prepared by mixing the constituents recited in Tables 1, 2 and 3 (respective content of the constituents is provided in wt.% based on the total weight of the hotmelt). For this purpose, a well-established process of physical hotmelt (HM)-mixing in a heated stirring vessel is applied:
1) A reactor is heated to desired mixing temperature (usually ~30°C above the targeted softening point of the adhesive).
2) The reactor is loaded with the polymers and the stabilizer additives.
3) The loaded materials are left in the reactor for melting until visually all of the material is molten.
4) The tackifiers are added slowly under stirring to homogenously blend them with the molten composition.
5) Waxes and other additives, if present in the composition, are preferably added towards the end to avoid degradation.
6) The hotmelt is ready for pack-out once visual inspection shows a homogenous mix with no unsolved particles left.

### Example 1

**Table 1: Constituents of Example 1**

| **Class of raw material** | **Primary Function inside formulation** | **Content in wt.%** |
|---|---|---|
| polyolefin polymer^{a} | gives cohesive strength, elasticity | 30.10% |
| Maleic Anhydr. Grafted Polyolefin^{b} | compatibilizes polar and non-polar raws | 5.00% |
| Rosin Ester (Tackifier) | gives adhesion, less sticky at RT | 16.00% |
| Hydrocarbonresin (Tackifier) | gives adhesion, less sticky at RT | 16.00% |
| PE-Wax | gives hardness and distinct meltpoint | 16.00% |
| PE-Wax | gives hardness and distinct meltpoint | 16.00% |
| Antioxidant | gives stability | 0.30% |
| Antioxidant | gives stability | 0.60% |

| | | |
|---|---|---|
| ^{a} Said compound had a Brookfield viscosity of 17 Pa·s, a Tg of -56.1 °C and a melting point Tm of 70 °C. ^{b} Said compound had a Brookfield of 13 Pa.s (Brookfield 177 °C), a Tg of -58.0 °C and a melting point Tm of 68 °C. | | |

### Example 2

**Table 2: Constituents of Example 2**

| **Class of raw material** | **Primary Function inside formulation** | **Content in wt.%** |
|---|---|---|
| highly branched paraffinic olefin (oil) | viscosity regulator | 11.50% |
| C9- Carbonresin | gives adhesion | 22.00% |
| C9- Carbonresin | gives adhesion | 29.00% |
| SEBS-rubber polymer^{a} | gives cohesive strength, elasticity | 4.00% |
| SEPS-rubber polymer^{b} | gives cohesive strength, elasticity | 5.50% |
| Antioxidant | gives stability | 0.50% |
| Maleic Anhydr. Grafted Polypropylene | gives cohesive strength, elasticity, adhesion | 4.00% |
| Maleic Anhydr. Grafted Polyethylene | gives cohesive strength, elasticity, adhesion | 10.00% |
| Maleic Anhydr. Grafted Polypropylene | gives cohesive strength, elasticity, adhesion | 13.50% |

| | | |
|---|---|---|
| ^{a} Said compound had a melt flow index (ISO 1133) of 5.0 g/10 min (230°/5 kg) and a Tg between -50 and 20 °C. ^{b} Said compound had a melt flow index (ISO 1133) of 7.0 g/10 min (230°/2.16 kg) and a Tg between -50 and 20 °C. | | |

### Example 3

**Table 3: Constituents of Example 3**

| **Class of raw material** | **Primary Function inside formulation** | **Content in wt.%** |
|---|---|---|
| Polyolefin Polymer^{a} | gives cohesive strength, elasticity | 59.40% |
| Polyolefin Polymer^{b} | gives cohesive strength, elasticity | 23.30% |
| Antioxidant | gives stability | 1.50% |
| Cycloaliphat. Hydrocarbon Resin | gives adhesion | 14.90% |
| Antioxidant | gives stability | 0.90% |

| | | |
|---|---|---|
| ^{a} Said compound had a melt flow index (ISO 1133) of 5.5 g/10 min (230°/2.16 kg), a Tg between -50 and 20 °C and a melting point Tm of 132 °C. ^{b} Said compound had a melt flow index (ISO 1133) of 7.0 g/10 min (230°/2.16 kg), a Tg between -50 and 20 °C and a melting point Tm of 70 °C. | | |

The parameters of the hotmelt according to Examples 1 to 3 were tested and measured in accordance with the methods recited above. The results are summarized in Table 4.

**Table 4: Summary of the results achieved by the hotmelt according to the examples**

| | Example 1 | Example 2 | Example 3 |
|---|---|---|---|
| Viscosity | 2545 mPa·s at 130°C | 1780 mPa·s at 170°C | 4588 mPa·s at 210°C |
| Surface Hardness | Shore A = 90 | Shore A = 82 | Shore A = 97 |
| Processability | 5 bar | 5 bar | 5 bar |
| Deformability | 10 s | 8 s | 8 s |
| Alcohol resistance | PASS | PASS | PASS |
| Softening Point | 110°C | 139°C | 144°C |
| Tg (DSC) | -27.5°C | -43°C | -11 °C |

As demonstrated through the experimental data in the present application, the hotmelt compositions of the present invention give rise to viscosity and processability suitable for low pressure molding processes, excellent deformability from the mold (very short cycle times of only few seconds are required) whilst, at the same time, achieving the surface hardness required of articles as well as alcohol resistance.

## Claims

1. A low pressure molding process for manufacturing an article, comprising the steps of:
(i) placing a component to be encapsulated into a mold;
(ii) melting a hotmelt;
(iii) injection of the molten hotmelt through a nozzle into a mold;
(iv) solidification of the injected molten hotmelt by cooling;
(v) removing of the molded article from the mold;
wherein the hotmelt comprises at least one polyolefin copolymer.

2. The process according to claim 1, wherein the viscosity of the hotmelt, determined as described in the description, ranges from 500 to 50.000 mPa.s, preferably from 750 to 30.000 mPa.s and most preferably from 1000 to 10.000 mPa.s.

3. The process according to any one of claims 1 or 2, wherein the process has a cycle time of 1 to 60 s, preferably of 1 to 40 s and most preferably of 1 to 20 s.

4. The process according to any one of the preceding claims, wherein injection of the hotmelt is performed at 100 to 10.000 kPa, preferably at 100 to 5000 kPa, more preferably 100 to 2000 kPa, even more preferably 100 to 1500 kPa and most preferably 100 to 1000 kPa .

5. The process according to any one of the preceding claims, wherein the at least one polyolefin copolymer is a copolymer of
(i) at least two α-olefins of 2 to 10 carbon atoms, or
(ii) at least one α-olefin of 2 to 10 carbon atoms and at least one vinyl compound other than the α-olefin of 2 to 10 carbon atoms.

6. The process according to claim 5, wherein the α-olefin of 2 to 10 carbon atoms is selected from the group consisting of ethylene, propylene, butene-1, pentene-1, hexene-1, 3-methylbutene-1, 4-methylpentene-1, 3-methylhexene-1, octene-1, preferably the α-olefin of 2 to 10 carbon atoms is selected from the group consisting of ethylene, propylene, butene-1, octene-1.

7. The process according to any one of claims 5 or 6, wherein the vinyl compound is
(i) an aromatic vinyl compound selected from the group consisting of styrene, α-methylstyrene, methylstyrene, monochlorostyrene, dichlorostyrene, monobromostyrene, dibromostyrene, fluorostyrene, p-t-butylstyrene, and ethylstyrene, preferably styrene;
(ii) an alkyl acrylate selected from the group consisting of methyl acrylate, ethyl acrylate, propyl acrylate, butyl acrylate, amyl acrylate, hexyl acrylate, octyl acrylate, 2-ethylhexyl acrylate, cyclohexyl acrylate, and phenyl acrylate;
(iii) a vinyl ester compound selected from the group consisting of methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate, benzyl methacrylate;
(iv) an unsaturated acid anhydride selected from maleic anhydride and itaconic acid, preferably maleic anhydride; and/or
(v) an unsaturated acid selected from the group consisting of acrylic acid and methacrylic acid.

8. The process according to any one of the preceding claims, wherein the at least one polyolefin copolymer is selected from the group consisting of:
(i) ethylene-octene random or block copolymer,
(ii) ethylene-propylene random or block copolymer,
(iii) ethylene-butene random or block copolymer,
(iv) maleic anhydride grafted polyethylene copolymer,
(v) maleic anhydride grafted polypropylene copolymer,
(vi) styrene-ethylene-propylene-styrene block copolymers (SEPS),
(vii) styrene-ethylene-butylene-styrene block copolymer (SEBS),
(viii) styrene-isoprene-styrene block copolymer (SIS),
(xi) styrene-butadiene-styrene block copolymer (SBS),
(x) ethylene-propylene-butylene terpolymer, and/or
(xi) ethylene-propylene-octene terpolymer.

9. The process according to any one of the preceding claims, wherein the hotmelt comprises from 20 to 90 wt.%, preferably from 25 to 85 wt.%, and most preferably from 30 to 80 wt.% of the at least one polyolefin copolymer based on the total weight of the hotmelt.

10. The process according to any one of the preceding claims, wherein the hotmelt has a glass transition temperature Tg, determined as described in the description, of -70 to 80°C, more preferably of -60 to 30°C, even more preferably of -50 to 20°C.

11. The process according to any one of the preceding claims, wherein the hotmelt has a softening point, determined as described in the description, of above 90°C, more preferably above 100 °C, and most preferably 110 °C or more.

12. The process according to any one of the preceding claims, wherein the hotmelt comprises a hydrocarbon resin, wherein the hydrocarbon resin is:
- an amorphous, thermoplastic polymer with a molecular weight of 400 to 5,000 g/mol, preferably 500 to 3000 g/mol, determined as described in the description; and/or
- aromatic or cycloaliphatic hydrocarbon resin selected from the group consisting of a C5 aliphatic resin, a C9 aromatic resin, a C5/C9 copolymer resin and modified or hydrogenated versions thereof.

13. The process according to any one of the preceding claims, wherein the hotmelt comprises at least one additive selected from the group consisting of antioxidants, waxes, UV protectors, solvents, adhesion promoters, fillers, pigments, flame retardants, UV absorbers, optical brighteners and fragrances, preferably in an amount of 0.01 to 20 wt.% by weight, more preferably from 0.1 to 5 % by weight, based on the total weight of the hotmelt.

14. The process according to any one of the preceding claims, wherein the hotmelt comprises at least one further polymer selected from the group consisting of polymers based on acrylate, polyester, urethane, ethylene acrylate, butyl rubber and (synthetic) natural rubber; ethylene-vinyl acetate copolymers (EVA), polyamide (co)polymers (PA), individually and in a mixture, particularly preferred is a styrene block copolymer such as a styrene and styrene-butadiene copolymer (SBC or SBS, SBR), or a styrene-isoprene-butylene copolymer (SIBS).

15. Use of a hotmelt comprising at least one polyolefin copolymer in a low pressure molding process for producing medical articles and articles in the field of assembly.
